(19) Europäisches Patentamt
European Patent Office
Office européen des brevets

(11) **EP 3 767 571 A1**

(12) **EUROPEAN PATENT APPLICATION**
published in accordance with Art. 153(4) EPC

(43) Date of publication:
**20.01.2021 Bulletin 2021/03**

(51) Int Cl.:
***G06Q 30/02*** *(2012.01)*

(21) Application number: **18909985.6**

(22) Date of filing: **21.09.2018**

(86) International application number:
**PCT/KR2018/011319**

(87) International publication number:
**WO 2019/177216 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2018 KR 20180030072**

(71) Applicant: **KSEEK.CO.LTD**
**Daejeon 32147 (KR)**

(72) Inventor: **KIM, Young-real**
**Daejeon 32147 (KR)**

(74) Representative: **Ter Meer Steinmeister & Partner**
**Patentanwälte mbB**
**Nymphenburger Straße 4**
**80335 München (DE)**

(54) **METHOD AND SYSTEM FOR ONLINE EVENT-BASED TARGETED ADVERTISEMENT PLATFORM SERVICE**

(57) The present invention relates to an online event-based targeted advertisement for providing effective targeted advertisements for users. According to the present invention, it is possible to operate a platform business in which a virtuous circle is provided by matching targeted advertisements and online events for advertisers who want effective advertisements by designating targets, event operators who want to make money through event management, and general users who participate in interesting events and want rewards for participating or winning.

FIG. 1

**Description**

**Technical Field**

The present invention relates to a technology related to an online advertisement platform that may allow a plurality of general users, an advertiser and an online event operator to realize mutual benefits by executing an event through which they purchase an advertisement product or encounter an advertisement using their respective terminals. More particularly, the present invention relates to a technology of paying a profit according to a predetermined manner to an event operator according to the sum of points of users consumed in a process in which an advertiser designates a target to purchase an advertisement product, users accumulate points for an advertisement while encountering the advertisement using user terminals, and an operator hosts an event through which a plurality of users may use the points using an operator terminal in an online advertisement platform server connected to a plurality of user terminal, an advertiser terminal, and an operator terminal.

In the whole specification, the 'user terminal' is a terminal in that data can be transmitted to and received from a platform server by means of a network means and that is used for participating in an online event or encountering an advertisement. The user terminal can provide a means for viewing or reading the advertisements and provide a means for participating in the online event.

In the whole specification, the 'advertiser terminal' is used for uploading advertisement contents to the platform server by means of advertisers who want to advertise, specifying target information on the target of the advertisement, or purchasing advertising products through online funds implementation etc.

In the whole specification, the 'operator terminal' is a terminal that sets contents related to the online event by means of an online event operator, writes questions on the quiz solution, bets the user's points according to the quiz solution, or makes settings related to the number of concurrent participants or time. The operator terminal may further include an output device such as a display or a speaker.

The user terminal, the advertiser terminal, and the operator terminal are configured to include one or more hardware systems such as a PC, a mobile phone, a tablet PC, a dedicated terminal and software that can be executed in combination with the same. These terminals may be connected to the platform server via a network means to transmit and receive data. The user terminal may further include an output device such as a display or a speaker. These terminals do not have to be physically different. In a case of the same hardware device, it may be configured on the platform server in the form of using various services according to the shape of the advertisers.

In the whole specification, the user refers to a person who uses a user terminal to watch the advertisement, participates in an online event while receiving the points, or consumes the points while consuming interactive contents. In addition, the advertiser refers to a person who pays an advertisement cost by designating an advertisement target using the advertiser terminal. The operator also refers to a person who uses the operator terminal and provides the online events or the interactive contents.

In the whole specification, the 'platform server' is a server that provides a target advertisement service for an advertiser, provides a target advertisement for a user, and provides an online event according to a command of the event manager. It is configured to always implement the service on the network such as the Internet etc. The platform server consists of a hardware system, an operating system, and major middleware and user applications. The platform server may configure all the functions in one physical server or may be configured separately in functional units in a plurality of servers. If the physical load increases according to the users, the same module also can be configured into a cluster using multiple servers.

In other words, the platform server is composed of a payment module, an event providing module, a user information management module, an advertisement management module, and a network module. Here, they can be configured as one server or distributed in several servers in preparation for access of many users.

In the whole specification, the 'target advertisement' refers to an advertisement service in which the advertisement contents of the advertiser are exposed only to a person who satisfies a specified user condition when the advertiser designates any user who wants to expose his advertisement. In other words, if a residential area is designated as Gangnam-gu, Seoul and a male age of 30-39 years is designated (target user condition to which the advertisement should be exposed), in the system, the corresponding advertisement is shown to only the user who meet the above conditions among many users. Since the target advertisement is based on the personal information such as students or graduates of specific school or employees of specific company etc., the application scope thereof is broadly.

In the whole specification, the 'points' is an intangible asset, which is managed separately for each user, that is accumulated as a number as a user encounters an advertisement or used as a participation cost or a betting cost for each event stage in an online event and is deducted. Also, it can be used as the name of balloons, hearts, coins, etc.

In the whole specification, The 'online event' is an event that allows the users to participate at a specific time. The Online events can be operated simultaneously with multiple event channels. The platform server is configured to provide simultaneous online events by multiple operators. Each online event may be a form of quiz event that solves the quiz questions of multiple levels for separate participants and rewards the user with the most points. It may be a talk show event of performing votes or polls step by step to a large number of people. The online event is characterized by rewarding the participants of the event according to the event participation result.

In the whole specification, the 'interactive content' refers to a content service that utilizes the online event opened by the operator so as to allow a plurality of users to participate therein. It may correspond to an interactive talk show and an interactive quiz show, etc. At this time, it is contents or contents service in that the contents are configured through the participation of the participants, while the edited video is sent in the conventional broadcast.

**Background Art**

An advertisement service using an online media is becoming very popular. In particular, with the widespread use of the smartphones, since the users can easily access online contents, the advertising revenues of the medias such as the existing broadcasts and newspapers are decreasing day by day.

Generally, the advertisement techniques of the online medias utilizes a method of exposing advertisements to users by including the advertisements in the contents such as news or broadcasting, in which the use of the user is concentrated. At this time, the online media collects personal information such as an age, a gender, and a location of the users and provides the target advertisements based on the personal information.

The target advertisements are recently attracting attention due to a high advertising effectiveness and various methods for measuring the effects of advertising.

In addition, as a background technology of the present invention, there is a small-sum advertising service used in the SNS. The small-sum advertising service is an extension of the target advertisement. When the advertisement cost is paid in small amounts through the target advertisement for a specific region, the SNS service provides the target advertisement for only the amount paid. In this case, the company of running the platform earns money from advertising.

The online event entitles unspecified or specific persons to participate. When the online event is opened, the users can participate in the online event to receive prizes through a draw or with a high ranking score.

There is an online event combined with live broadcast that offers 5-12 quiz questions through the live broadcast and awards the winner with a high score by solving the quiz question by means of the users who go online, or draws a prize among those who solved a specific question.

An afreeca TV allows online broadcasters to receive donated star balloons from users, and provides BJ with cash equivalent to the star balloon obtained by the BJ. African TV viewers can buy and use a star balloon worth 110 won and the BJ earns about 70% of the donated star balloons.

Facebook asks users to buy online points called credits for cash and uses them to buy items online.

As an online advertising method, an advertisement platform, that provides the user with the amount when looking at an advertising video or an advertisement screen, is also in service. These services seek to increase the advertising effect by receiving target advertisements from advertisers and allowing users corresponding to the targets to actively watch the advertisements. The platform users earn revenue by subtracting the costs paid to users from the advertising costs that receive from adverti sers.

**Disclosure**

**Technical Question**

Generally, users do not want to pay even a small amount of money. Therefore, it may be difficult to generate a profit directly through points required for an online event. However, advertisers who are customers of small amount advertisements are willing to pay a cost in purchasing advertisement products. The users tend to actively participate in online events where a reward is enforced. The users will be willing to view advertisements to obtain the points that should be necessarily used in the online events. An applicant intends to solve a technical problem that may allow some active advertisers to pay a cost for advertisements, allow consumers to view the advertisements and obtain points, and allow an online event operator to secure a profit by executing an online event through the present invention.

In the present invention, anyone easily registers an advertisement through a small amount advertisement and a target advertisement and pay an advertisement fee to a platform provider. An object of the present invention is to allow a user to receive a reward for an advertisement by obtaining points through the advertisement and allow an operator to obtain a profit by executing an online event through which the user consumes the points.

That is, an object of the present invention is to implement a system that links a small amount advertisement and a target advertisement to an online event activation section to allow more persons to voluntarily provide and view advertisements and use points in a process of providing a good-quality event, thereby allowing the platform provider to generate a profit.

Advertisers designate and purchase a desired amount of targeted advertisement products by designating specific-region, specific-gender, or specific-age users, and general users may accumulate points as virtual currency by watching advertisements valid for the general users. In addition, suggested is a platform service in which a variety of operators exhaust the points of general users by providing step-by-step online events that exhaust the points of the general users, and the operators are compensated in proportion to the points of the users that the operators exhausted.

**Technical solution**

In order to solve the above problem, the present invention suggests user terminals through which a plurality of users participate in online events or view advertisements, advertiser terminals through which a plurality of advertisers register their advertisement data and purchase target advertisements, operator terminals used by a plurality of event operators to execute online events for the purpose of consuming points of users, and an advertisement platform server system selling the target advertisements, issuing points through a target advertisement service, and executing the online events for consuming the points.

In order to solve the above problem, the present invention suggests a method of exposing target advertisements to a plurality of users and paying points to the users, allowing a plurality of event operators to operate online events, and performing rewards on the event operators with respect to points consumed by the plurality of users while participating in the online events, when a plurality of advertisers designate targets and purchase advertisement products.

In addition, in order to solve the above problem, the present invention suggests a method of inducing more participants to participate in an online event and performing a reward on a winner of the online event or a user selected by a lottery among correct answerers or incorrect answerers in a specific event step. A step of thoroughly confirming personal information at the time of performing the reward on the user so that the user registers the personal information more accurately may be further suggested.

In order to solve the above problem, the present invention additionally suggests an interactive event including an online event such as a quiz, a survey, or a vote in which users simultaneously participate over various steps. Here, the step is configured in a form where it includes an online event step in which the users participate in the quiz, the survey, the vote, or the like, and a result obtained by scoring the quiz, the survey, the vote, or the like, or analyzing answers of the users is provided.

A quiz game may be operated by providing a plurality of online event steps to a plurality of participants, and a questionnaire show may be executed through a plurality of surveys or votes. The users may pay points as an entrance fee or bet the points in each event step when they participate in the event.

The present invention additionally suggests a method of a specific operator providing a reward according to a cumulative numerical value of points that the users consumed in one particular event or a plurality of specific events operated for a predetermined period.

The present invention additionally provides an interactive content service providing method of producing a video such as a quiz show or a talk show based on an online event and transmitting the video to a user terminal in real time in order to activate an interactive content service.

The present invention suggests a method of performing a reward on event participants and an operator at points consumed in a specific event and calculating a profit margin remaining after the reward as a profit of a platform provider through the event so that platform business may be stably maintained.

**Advantageous Effects**

According to the present invention, it is possible to create platform business that realizes a profit margin by actively activating advertisement exposure of a user target advertisement market, combining an online event in which a large amount of points, which are virtual goods generated through the advertisement exposure, are consumed, and performing a reward for the consumed user points on an operator of the online event.

According to the present invention, the reward is performed on a user winning or a user drawn through the event, such that more persons may participate in the event to consume the points.

Particularly, the user is allowed to perform content business linked to an advertisement profit through a small amount advertisement or a target advertisement in an existing broadcasting program that conducts a quiz or a discussion.

In addition, operators providing an interactive content service based on an online quiz event or survey event including two or more steps in which a plurality of users simultaneously participate may produce various interactive content services for online events by planning contents of various themes and formats to secure competitiveness.

According to the present invention, when utilizing such a platform service, users, who participate in online events in which a large monetary prize or prize is involved, need to obtain more points in order to achieve greater results and thus, users may watch advertisements more actively. The points that users accumulate by watching advertisements may cause competition among operators to provide more profitable or competitive online events.

According to the present invention, it is possible to operate a platform business in which a virtuous circle is provided by matching targeted advertisements and online events for advertisers who want effective advertisements by designating targets, event operators who want to make money through event management, and general users who participate in interesting events and want rewards for participating or winning.

**Brief Description of Drawings**

The above and other objects, features and advantages of the present invention will be more apparent from the following detailed description taken in conjunction with the accompanying drawings, in which:

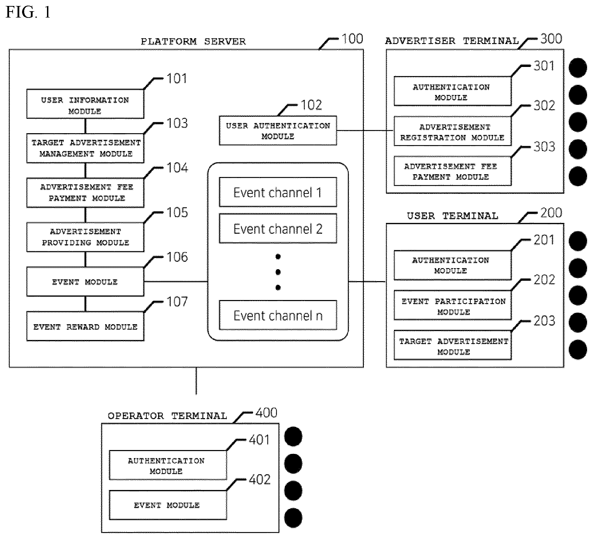

FIG. 1 is a view illustrating a configuration of a system according to an exemplary embodiment of the present invention.

Best Mode

Mode for Invention

Since the description of the present invention is a mere embodiment for structural and functional description, it must not be interpreted that the scope of the present invention is limited by the embodiments described in the text. That is, since the embodiments can be variously changed and have various forms, it should be understood that the scope of the invention includes the equivalents for realizing the technical concept. Also, since the specific embodiments do not include all objects and effects presented by the present invention, the scope of the present invention is not limited by them.

This invention can be implemented in many different forms without departing from technical aspects or main features.

Therefore, the implementation examples of this invention are nothing more than simple examples in all respects and will not be interpreted restrictively.

Even though the terms such as 1, 2, and others can be used to explain many components, the above components shall not be limited by the above terms.

The above terms are used only to distinguish one component from the other component.

For example, the first component can be named the second component without departing from the scope of rights in this invention. Similarly, the second component can be named the first component.

The term called "and/or" includes the combination of the plural described and related items or a certain item of the plural described and related items.

When it is mentioned to be "connected" or "linked" to the other component, a certain component may be connected or linked to the other component. However, it will be understood that there may be some other components between them.

On the other hand, when it is mentioned to be directly "connected" or "linked" to the other component, a certain component will be understood that no other component exists between them.

The terms used in this application do not intend to limit this invention, but are used only to explain specific implementation examples.

The singular expression includes plural expressions unless it is apparently different in the context.

The terms such as "include", "equipped" or "have" in this application intend to designate that the feature, number, stage, movement, component, part or the combination described in the specification exist.

Therefore, it will be understood that the existence or the additional possibility of one or more than one different features, numbers, stages, actions, components, parts and the combination is not excluded in advance.

Unless differently defined, all the terms used here including technical or scientific terms have the same meaning with what is generally understood by one who has common knowledge in the technical field that this invention belongs to.

The terms such as those defined in the dictionary commonly used will be interpreted to have the meanings matching with the meanings in the context of the related technologies. Unless clearly defined in this application, they are not interpreted as ideal or excessively formal meanings.

The desirable implementation examples in accordance with this invention are explained in detail in reference to the drawings attached below. But, the same reference numbers are given to the same or corresponding components regardless of drawing codes and repeated explanations will be omitted. The detailed description about the prior related technology will also be omitted when it is judged to blur the gist of this invention in explaining this invention.

An exemplary embodiment of the present invention will be described in detail with reference to FIG. 1.

FIG. 1 is a schematic view illustrating that a plurality of user terminals (200) each used by a plurality of users, advertiser terminals (300) each used by a plurality of advertisers, and a plurality of operator terminals (400) each used by a plurality of operators are connected to a platform server (100) by a network means such as the Internet.

In the present invention, a user terminal used by a general user, an advertiser terminal used by an advertiser, and an operator terminal operating an online event may be hardware apparatuses manufactured in independent forms, respectively, and may be composed of application software (SW) optimized for each function and a hardware terminal capable of installing and operating these SW.

The user terminal (200), the advertiser terminal (300), the operator terminal (400) may be connected to the platform server (100) by the network means, respectively, to transmit and receive data to and from the platform server (100), and may include an authentication module identify use authority of the respective users, advertisers, and operators by a method such as login.

The three terminals may have the same hardware characteristics or use the same software, and be divided by an information service distinguished after the login. That is, when the information service is provided as a web service, even though the three terminals use the same hardware or the same web browser, the three terminals may be divided into the advertiser terminal (300) when an authenticated user uses an advertiser service, may be divided into the operator terminal (400) when the authenticated user uses an operator service, and may be divided into the user terminal (200) when the authenticated user uses a general user service.

The platform server (100) includes a user information module (101), and stores personal information of a user. The personal information of the user may selectively include a gender, an age, a birthday, an address, a hometown, friend information, friends' phone numbers stored in a personal phone, education history, occupation information, and the like. The personal information may include personal information of a concept extended to acquaintances such as the presence of children or whether the child attends an elementary school.

In order to increase an effect of the present invention, the personal information of the user needs to include a search word frequently searched by a specific user or product or brand information of interest of the specific user. Information on a product, a food or the like of interest may be inferred through a conversation or a text of the user on a chat room or a bulletin board service and be utilized as the personal information of the specific user.

The platform server (100) includes a user authentication module (102). The user authentication module confirms qualifications of the users, the advertisers, the event operators, and the like through an authentication process such as login, and confirms the qualification of the user during a period in which the user accesses the platform server in order to provide a service suitable for each qualification.

The platform server (100) includes a target advertisement management module (103), and the target advertisement management module (103) stores advertisement target information, advertisement data and the like designated in an existing advertisement. In addition, the target advertisement management module includes a detailed module that allows the advertiser to pay an advertisement cost.

A payment module included in the target advertisement sales module (103) performs a step of receiving a payment of an advertisement fee from the advertiser. It is preferable that a payment method of the advertisement fee is a method of allowing the advertiser to selectively use bank transfer or a credit card Alternatively, a method of receiving points operated by the platform server itself or another online payment method such as virtual currency or cryptocurrency may be applied, or a method of receiving specific points managed by a third party is possible.

The advertisement target information may be information on a date-of-birth range or an age group of a valid user who will view the advertisement, and may selectively include a gender of the user, whether or not the user is a graduate of a specific school, and the like. Information such as the date-of-birth is received from the user and the age of the user may be compared in view of a current time. Therefore, division of the advertisement target by the age information is the same concept as that of division of the advertisement target by the date-of-birth information.

The advertisement data of the platform server (100) may selectively include an advertisement image, an advertisement text, an advertisement photograph, and the like. The advertisement data may be digital data, and an image file such as jpg, png, gif, or bmp, a video file such as MP4, and a sound file such as MP3 may be selectively used. The advertisement data may be uploaded on YouTube, a portal service, or homepage, and may be used by registering the corresponding uniform resource locator (URL) information.

The advertisement data registered in the platform server (100) should be exposed as a target advertisement after the advertisement fee is paid. To this end, the platform server further includes an advertisement fee payment module. The advertisement fee payment module may use various methods such as in-app payment, card payment, and bank transfer capable of performing payment online.

The advertisement fee payment module (104) of the platform server (100) may be provided so that a payment may be made by virtual currency, cryptocurrency, or points accumulated by the advertiser as a user. The advertisement fee payment module (104) should be configured to correspond to an interface for an advertisement fee payment of the advertiser terminal.

The platform server (100) allows the points to be stored and managed separately for each user. The point may be composed of only one value system, or a plurality of points having different value systems may also be applied. That is, one red heart may be used as the point, or two hearts (that is, a red heart and a blue heart) may be utilized as different value systems.

The platform server (100) further includes an advertisement providing module (105). The advertisement providing module (105) allows a valid advertisement to be exposed to a valid user in a manner of comparing whether there is a target advertisement set to correspond to the personal information of the specific user when the specific user uses a platform service.

It is preferable that the platform server (100) is designed to receive the advertisement fee of the advertiser by bank transfer, a credit card, or the like, and to pay a reward to the operator by bank transfer, a credit card, or the like.

The advertisement providing module (105) confirms whether the specific user is a valid user for a specific advertisement and then provides the advertisement. A procedure of confirming whether the specific user is the valid user is configured by comparing whether or not an advertisement fee paid to the specific advertisement is sufficient, whether or not a time is within a validity period designated in the advertisement, or whether or not the personal information of the specific user is suitable for advertisement target information.

A process of providing the advertisement by the specific user is configured as a linkage function with the user terminal (200). When it is sufficient to simply view the advertisement on the user terminal (200), it is sufficient to simply expose a video, an image, an advertisement text, or the like on a display.

The advertisement providing module may add a user mission to an advertisement process in order to increase efficiency of the advertisement.

Additionally, the advertisement providing module (105) may be designed so that a specific action is induced by the user viewing the advertisement using the user terminal (200). For example, when guidance is provided in the advertisement so as to input a product name of a product that is being advertised and the user inputs the product name in the user terminal, the user terminal transmits the input information to the platform server, and the advertisement providing module confirms the input information to confirm whether or not a mission is successful.

A user mission of the advertisement may be designed in various forms. For example, a manner of allowing the user to click a specific icon on an advertisement screen and transmitting information indicating whether or not the specific icon has been clicked to the platform server to confirm whether or not the mission is successful is also included in these forms.

The advertisement providing module (105) directly determines whether or not a user mission for the specific advertisement has been performed by receiving information from the user terminal (200) or determines whether or not the user mission is successful by receiving information on whether or not the user mission is successful from the user terminal (200).

The advertisement providing module (105) fragmentarily or compositely sets simple exposure or mission performance to provide corresponding points to the user viewing the advertisement. The advertisement providing module accumulates new points acquired by the specific user viewing the advertisement on the points of the specific user.

When a validity period is set for the specific advertisement, the advertisement providing module (105) provides the advertisement only within the validity period. The advertisement providing module configures statistical data for users obtaining the points by viewing the advertisement and provides the statistical data to the advertiser terminal (300).

The platform server (100) includes an event module (106). The event module simultaneously provides a plurality of event channels so that a plurality of operators may access the plurality of event channels to provide online events. Here, the event channel may mean a broadcasting channel or may have a form of a chat room that permits multi-connection of transmission control protocol/internet protocol (TCP/IP).

The event module (106) of the platform server (100) opens an event channel according to a request of the operator terminal (400). The event channel may be an automatic execution according to scheduled execution of the operator terminal (400), and the operator terminal (400) executes the event step in a manual execution method of executing directly a problem.

The event module (106) manages information on each online event step to be performed over several steps.

The event module (106) may allow the specific user to participate in a specific online event by converting points held by the specific user into other temporary points when the specific user participates in the specific online event.

An example in which the event module (106) operates two point systems may be configured in a manner of allowing the overall points in the platform server (100) to be displayed as hearts, allowing a predetermined amount of hearts to be used as a bet amount, an entrance fee or the like when the specific user participates in the specific online event, and providing a predetermined amount of star balloons to the user participating in the specific online event to allow the user to use a star balloon in a betting step of the online event step.

It is also preferable that the event module (106) is configured so that the points of the specific user is used in a step in which the specific user who is participating in the specific online event transmits a photograph or a text to the event channel or a step in which the corresponding photograph or text is disclosed to another on the event channel.

It is also preferable that the event module (106) is configured so that the specific user who is participating in the specific online event uses his/her points by donating his/her points to an online event operator or a specific donation organization.

A service that combines online broadcasting with the online event of the present invention may be possible. Online broadcasting is configured by applying a technology of streaming a sound or a video in a network module such as the Internet.

Although not illustrated in FIG. 1, it is preferable that a streaming module (108) is further included in the platform server (100). The streaming module serves to transmit streaming data including a video or a sound transmitted from the operation terminal (400) to the user terminal (200).

The streaming module (108) is divided and serviced in online event channel units, and is designed so that all persons who are participating in the specific online event may share a specific streaming with each other.

It is preferable that the streaming module (108) includes information such as a percentage of a quiz correct answer or ranks of the users according to the event participation in video streaming and transmits the video streaming including such information to the user terminal (200).

A specific event channel in the user terminal (200) permits or blocks a simultaneous access of a plurality of user terminals used by a plurality of users. A reference of the access permission may be a limit of simultaneously accessed persons, or may be set based on personal information such as a person coming from a specific region, a specific age group, a man or woman, or the like.

The event channel provides an on-line event related to a vote, a survey, a quiz, and the like over various steps according to a request of the operator. According to a request of the operator terminal of the operator, information on an event entrance fee, an answer participation fee, and point betting in each event step for the event channel may be set.

In the online event provided by the platform server (100), an online event of a specific step is executed in a manner of transmitting at least one question of the vote, the survey, and the quiz to the plurality of user terminals, receiving responses of the user terminals for a predetermined time, and then collecting the responses and statistically analyzing the answers or evaluating correct or incorrect answers of the users to give scores.

When the specific online event is a quiz game in which a plurality of users participates, the event is executed while accumulating scores for each user, and the final winner may be selected or any of correct answerers to quizzes may be rewarded through a lottery.

An event channel for the specific online event ends execution of online votes, surveys, or quizzes of several steps and announces a person getting the highest score. The event module (106) allows a reserved and executed event to automatically end when all steps of the corresponding event channel are executed.

The event module (106) of the platform server (100) allows points of the user to be used as a concept of an entrance fee when the user enters and exits from a specific event. The specific user entering the specific event charging an entrance fee enters the specific event such that points designated for entry into the event are deducted from points of the specific user.

The event module (106) of the platform server (100) allows the user to answer to the online event using the user terminal in a specific event step to use the points of the user. The specific user answers to the online event using the user terminal in the specific event step in which an answer participation fee is set, such that points designated for answer participation are deducted from the points of the specific user.

The event module (106) of the platform server (100) allows the user to bet suggested points while answering to the online event using the user terminal in a specific event step, thereby using the points of the user. The specific user answers to the online event while betting a predetermined amount of points using his/her user terminal in a specific event step in which the user may bet points, such that the betted points are deducted from the points of the specific user.

The event module (106) of the platform server (100) allows scores to be differently given based on the points bet by the user when the user correctly answers or wrongly answers a quiz in the specific event step. For example, in an event step for a specific quiz for which the specific user may bet (100) points, a score of 10,000 may be given to a correct answerer betting (100) points and a score of 1,000 may be given to a correct answerer betting 10 points. A demerit mark may not be provided to an incorrect answerer betting a predetermined point or may be provided in proportion to points that is bet by an incorrect answerer.

The event module of the platform server (100) may allow the points of the user to be collectively used on a server side in a predefined manner or allow points designated by the user to be used when the points are used in a form of the entrance fee of the specific event, the answer participation fee in the specific event step, or the betting in the specific event step.

In the point betting in each event step in the event module, it is preferable to allow the user to designate an amount of points to bet.

The event module (106) calculates the sum of points used by all participants in the specific online event after the specific online event ends. The event module may also calculate the cumulative sum of points used by all participants in an online event of a specific operator for a predetermined period. In this manner, the event module may calculate a user point consumed amount by the specific operator.

The platform server (100) further includes an event reward module (107). The event reward module (107) calculates a total amount of points used by the users through the specific event or the event operation performed by the event operator as a point consumed amount, calculates an amount of reward to be rewarded to the specific operator in a predetermined manner, and performs a reward.

The event reward module (107) performs a lottery on the correct answerer or the incorrect answerer among persons participating in the specific event step according to a setting set by the event operator to perform the reward on the specific user. In addition, the event reward module may perform the reward on a user or a team that wins in the specific online event.

The event reward module (107) may further prepare a procedure of confirming whether or not personal information of the user is correct for user reward of a predetermined amount or more in order to induce the user to register more accurate personal information. As the procedure of confirming whether or not the personal information of the user is correct, a method such as various authentication certificates or phone number authentication may be used. A step of allowing the reward not to be performed in a case where the personal information of the user does not coincide with personal information directly registered by the specific user, which is a reward target, is additionally configured in the event reward module (107).

As the reward performed on the specific user or the specific operator by the event reward module (107), methods such as bank transfer, a credit card, virtual currency, cryptocurrency, and the like, may be selectively used. Alternatively, it is preferable to perform the reward in a manner of providing a certificate that secures a specific opportunity, such as a mobile gift certificate or a travel gift certificate.

The user terminal (200) may further include a streaming module (208). The streaming module (208) serves to output streaming data received from the platform server.

The platform server (100) transmits information on the sum of points of the users consumed in the specific event, the sum of points of the user consumed by the specific operator for a predetermined period, or the like, or information on a reward amount, a reward result, and the like determined by the sum of these points to the operator terminal (400).

A reward manner of the platform server (100) may be predetermined by a platform provider. For example, a manner of determining a predetermined ratio such as designating points of the reward target as 70% of a cash value may be used.

It is also preferable to designate options for each section so that reward ratios for the cash value are differently set depending on a scale of the points of the reward target. Different reward ratios may also be set depending on the operators.

The user terminal (200) includes an authentication module (201). The authentication module (201) transmits information necessary for authentication of the user to the platform server (100) and passes the authentication procedure to maintain an authentication relationship.

The user terminal (200) further includes an event participation module (202). The event participation module (202) allows the user to display a plurality of online events provided by the platform server and provides a user interface through which the user may enter a specific online event by selecting one of the plurality of online events.

Additionally, the event participation module (202) provides a user interface through which the user entering the online event selects or inputs an answer in response to several online event steps.

In order to execute the online event steps, the event participation module (202) may be related to a survey, a quiz, or a vote. Therefore, it is preferable that the event participation module (202) provides a user interface in a manner of allowing the user to input a text, a voice, or a photograph or select one of several examples.

The event participation module (202) includes an interface through which the user bets points in a specific event step. The event participation module displays points that may be maximally bet in each event participation step and allows the user to determine a betting level to make a bet.

The event participation module (202) displays currently available points, cumulative points, and the like of the user to allow the user to easily recognize these points.

The event participation module (202) includes an interface through which the user may donate his/her points to the operator or a third party.

The user terminal (200) further includes a target advertisement module (203). The target advertisement module (203) provides a user interface through which the advertisement provided by the platform server (100) may be exposed to the specific user. The advertisement is composed of at least one of a video, a picture, a sound, and a text, and is output by selectively using a display module, a speaker, or the like.

The target advertisement module (203) of the user terminal (200) collects information such as how much speaker volume the user has used or how long the user has turned on an advertisement screen and transmits the collected information to the platform server (100).

When a mission is included in a specific advertisement, the target advertisement module (203) of the user terminal (200) transmits whether a specific part is clicked or whether a specific word is input as a sound or a text to the server.

The target advertisement module (203) may also be configured to determine by itself whether or not the user has performed the mission and transmit determination information to the platform server (100).

The user terminal (200) receives information on point issuance from the platform server according to exposure or mission success for the advertisement and displays the corresponding information. In addition, the user terminal displays accumulated user point information to the user.

The advertiser terminal (300) includes an authentication module (301). The authentication module (301) serves to transmit authentication information of the advertiser to the platform server (100), receive an authentication result, and maintain authentication.

The advertiser terminal (300) includes an advertisement registration module (302). The advertisement registration module (302) allows the advertiser to register the advertisement in the platform server. A method of registering the advertisement in the platform server may be implemented by a method of uploading the advertisement directly to the platform server, a method of sending an online access position capable of accessing the advertisement, or the like.

The advertisement registration module (302) allows an advertisement target for a specific advertisement to be designated. The advertisement registration module (302) allows a range of the advertisement target to be set based on user information. Only one information may be set as a starting point, but it is preferable to set by intersecting a range of several information.

The advertisement registration module (302) advertisement target may set a wide range of user information such as date-of-birth, a gender, a residence region, a birth region, a workplace, and the like. The advertisement registration module transmits advertisement target information to the platform server when the user designates the advertisement target information.

The advertisement registration module (302) allows the advertiser to further set a validity period of the advertisement.

The advertiser terminal (300) further includes an advertisement fee payment module (303). The advertisement fee payment module (303) allows a specific advertiser to pay a cost for a specific advertisement. The payment can be made by an online credit card, bank transfer, an in-app payment, or user points, and may utilize a method that may be selected among various payment means such as virtual currency or cryptocurrency to be utilized.

The operator terminal (400) includes an authentication module (401). The authentication module (401) includes a user interface through which the operator may operate an event by passing an authentication procedure such as login.

The operator terminal (400) includes an event module (402). The event module of the operator terminal includes a user interface through which the operator inputs an event title to open an event. The operator inputs information required for opening the event, and the information is transmitted to the platform server.

The operator terminal (400) may construct event questions of various steps to be executed in a specific online event. Each step may be configured by combining one or more of a survey, a quiz, and a vote with each other.

The operator terminal (400) allows points required as a participation fee in participating in a specific online event step, points that may be bet, and the like to be set.

The operator terminal (400) allows users participating in the specific online event to set points to be used as an event entrance fee.

The operator terminal (400) allows a reward for winning to be performed on a user or a team that obtains the highest score among users participating in the specific online event. In addition, the operator terminal allows a specific reward to be performed on a correct answerer or an incorrect answerer among persons participating in a specific event step through a lottery.

The reward for the persons participating in the specific event may be a reward such as payment of points, cash, or virtual alternative currency or provision of a movie ticket or a travel ticket.

The operator terminal (400) receives information on the sum of points consumed by the users participating in the specific event step, information on the cumulative sum of points consumed through the event for a predetermined period, and the like from the platform server and displays these information, or displays information on an event reward paid to a specific operator by the platform server in a predetermined manner based on the points consumed through the event so that the specific operator may view this information.

The operator terminal (400) further includes a streaming module (404). The streaming module (404) serves to receive data from a video input apparatus and an audio input apparatus such as a video camera and configure streaming data, and transmits the streaming data to the platform server (100). In this case, an event channel should be capable of being identified so that only a specific event channel user may view the streaming data.

It is preferable that the operator terminal (400) is configured based on one hardware, but in a case where the streaming module (404) is added, the operator terminal (400) may also be configured by a plurality of hardware so as to be operated in functional units by adding separate hardware for streaming.

The platform server (200) calculates a cost obtained by subtracting the total reward amount from the sum of points consumed in the specific online event as a profit of a platform server provider. Here, the specific online event may be only one event, may be a plurality of events operated by the specific operator, or may be all events within a specific period.

In another embodiment of the present invention, an overall concept pursued in the present invention will be described.

The platform server (100) operates a point system called a 'heart coin'.

The platform server (100) allows a user to purchase the 'heart coin' at a value of about KRW (100).

The platform server (100) provides one heart coin to a user viewing a target advertisement video of fifteen seconds.

Any operator opens an online event in which KRW 10 million is paid to a winner and configures and executes twelve quiz steps in which five heart coins may be bet per user.

In this case, up to sixty heart coins may be used per user and a cash conversion value is KRW 6,000.

It is set that using a heart whenever the user solves a problem is advantageous in becoming the winner.

The platform server receives the video of fifteen seconds as advertisement data from an advertiser and receives advertisement target information.

Here, any advertiser is an advertiser managing a fried chicken restaurant in Sinsa-dong, Seoul, determines to provide an advertisement to one hundred men in their 40s living in Sinsa-dong, Seoul, and registers advertisement data having a content for a half-price discount on Friday.

The platform server (100) receives a payment of KRW (100),000 for the one hundred men by calculating KRW (100) per person.

The platform server (100) provides the advertisement to persons matched with personal information of the user.

In the platform server (100), various advertisers purchase various target advertisements, and various users view target advertisements matched with their personal information and obtain heart coins.

50,000 users wanting to receive prize money of KRW 10 million enter the online event.

In a case where it is assumed that 50,000 users use forty heart coins on average in the online event, the operator allows heart coins corresponding to about KRW (200) million to be consumed through the online event.

$$50,000 \text{ users} * 40 \text{ heart coins} * KRW (100) = KRW (200),000,000.$$

The platform provider pays KRW 140 million, which is a reward for 70%, which is a predetermined rate, to the operator. The platform server subtracts the prize money of KRW 10 million and notifies or pays the operator of KRW 130 million as a reward cost.

The number of operators is plural, and each operator utilizes better online broadcast contents in order to attract more users. The operator allows a popular entertainer in the target advertisement, such that fans of a specific entertainer may view more advertisements through the target advertisement and make a big profit for the operator.

The online events of the platform server are activated by various activities of the operators, such that the platform provider may generate a profit.

**Claims**

1. A method for online event based targeted advertisement platform service for a plurality of advertisers, a plurality of users, and an operator, comprising:

   a platform server receiving advertisement target information and advertisement data from an advertiser terminal;
   the platform server receiving a payment of an advertisement fee;
   the platform server providing the advertisement data to a valid user;
   the platform server paying points according to advertisement data viewing to a user and accumulating unique points for each user;
   the platform server executing an online event in which a plurality of users simultaneously participate according to a request of an operator terminal;
   the platform server deducting the points used by a user who is participating in the online event from accumulated points of the user;
   the platform server calculating a sum of points used by all users participating in the online event; and
   the platform server providing information on the sum of points used by all the users.

2. The method for online event-based targeted advertisement platform service of claim 1, wherein the operator is one of a plurality of operators,
   the method for online event-based targeted advertisement platform service further comprising the platform server performing a reward on an operator of the event.

**3.** The method for online event-based targeted advertisement platform service of claim 1, wherein the event is a quiz game event in which a plurality of persons simultaneously participate and includes two or more quiz steps, and a plurality of quiz participants participate in solving of quizzes for each quiz step and bet the points in order to obtain large scores in each quiz step.

**4.** The method for online event-based targeted advertisement platform service of claim 1, wherein the game event includes two or more survey or vote steps in which a plurality of persons simultaneously participate, and the plurality of persons consume predetermined points according to each survey or vote.

**5.** The method for online event-based targeted advertisement platform service of claim 1, wherein in a case where the advertisement data is a video of a predetermined time, and advertisement is recognized only when the advertisement data is viewed in a state where a volume of a user terminal is set to a predetermined volume or more such that the points are paid.

**6.** The method for online event-based targeted advertisement platform service of claim 1, wherein operators of the event are an unspecified number of the general public, are connected to a game server or an advertisement server by a network means, and passes through a user authentication process.

**7.** The method for online event-based targeted advertisement platform service of claim 1, wherein the platform server performs a reward on a winner among participants of a specific online event.

**8.** The method for online event-based targeted advertisement platform service of claim 1, wherein the platform server performs a reward on a participant drawn in a specific event step among participants of a specific online event.

**9.** The method for online event-based targeted advertisement platform service of claim 7 and 8, further comprising the platform server confirming whether personal information of the participant is correct and allowing the reward not to be performed when the personal information of the participant is not correct.

**10.** The method for online event-based targeted advertisement platform service of claim 1, wherein the online event is combined with online broadcasting.

**11.** The method for online event-based targeted advertisement platform service of claim 1, wherein the platform server provides a plurality of point systems, and one point system is converted into another point system in order for a specific user to participate in a specific online event.

**12.** The method for online event-based targeted advertisement platform service of claim 2, wherein the specific event is an event in which a reward is performed on a participant, and the reward is performed on the operator after the reward for the participant is subtracted.

**13.** The method for online event-based targeted advertisement platform service of claim 2, wherein a difference remaining after subtracting the reward for the operator or a specific participant for points consumed in the specific event is a profit of a platform service provider.

**14.** The method for online event-based targeted advertisement platform service of claim 2, wherein the payment of the advertisement cost is received in one or more of a bank transfer manner or a credit card transaction manner, and the reward for the operator is paid in one or more of a bank transfer manner or a credit card transaction manner.

FIG. 1

PLATFORM SERVER — 100

USER INFORMATION MODULE — 101

TARGET ADVERTISEMENT MANAGEMENT MODULE — 103

ADVERTISEMENT FEE PAYMENT MODULE — 104

ADVERTISEMENT PROVIDING MODULE — 105

EVENT MODULE — 106

EVENT REWARD MODULE — 107

USER AUTHENTICATION MODULE — 102

Event channel 1

Event channel 2

Event channel n

ADVERTISER TERMINAL — 300

AUTHENTICATION MODULE — 301

ADVERTISEMENT REGISTRATION MODULE — 302

ADVERTISEMENT FEE PAYMENT MODULE — 303

USER TERMINAL — 200

AUTHENTICATION MODULE — 201

EVENT PARTICIPATION MODULE — 202

TARGET ADVERTISEMENT MODULE — 203

OPERATOR TERMINAL — 400

AUTHENTICATION MODULE — 401

EVENT MODULE — 402

## INTERNATIONAL SEARCH REPORT

| International application No. |
| --- |
| **PCT/KR2018/011319** |

### A.  CLASSIFICATION OF SUBJECT MATTER

*G06Q 30/02(2012.01)i*

According to International Patent Classification (IPC) or to both national classification and IPC

### B.  FIELDS SEARCHED

Minimum documentation searched (classification system followed by classification symbols)
G06Q 30/02; G06Q 30/00; G06Q 50/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: advertisement, event, point, compensation, target

### C.  DOCUMENTS CONSIDERED TO BE RELEVANT

| Category* | Citation of document, with indication, where appropriate, of the relevant passages | Relevant to claim No. |
| --- | --- | --- |
| Y | KR 10-2018-0014540 A (NTRIGGER, INC.) 09 February 2018<br>See paragraphs [0038]-[0093], claims 1-9 and figures 1-2. | 1-14 |
| Y | KR 10-0844085 B1 (CHO, Gi Jin) 04 July 2008<br>See paragraphs [0087], [0109] and claims 1, 5. | 1-14 |
| Y | KR 10-2011-0133644 A (BAEK, Chang Yuel) 14 December 2011<br>See paragraphs [0008], [0029], [0053]-[0065] and claims 1-4, 8. | 1-14 |
| Y | KR 10-2006-0012347 A (YOUN, Jae Hyuk) 08 February 2006<br>See claim 1 and figure 2. | 11 |
| A | KR 10-2013-0006884 A (APPDISCO INC.) 18 January 2013<br>See claims 1, 4, 6 and figure 3. | 1-14 |

☐ Further documents are listed in the continuation of Box C.     ☒ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 JANUARY 2019 (10.01.2019) | **10 JANUARY 2019 (10.01.2019)** |

| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No.  +82-42-481-8578 | Authorized officer<br><br><br>Telephone No. |
| --- | --- |

Form PCT/ISA/210 (second sheet) (January 2015)

INTERNATIONAL SEARCH REPORT
Information on patent family members

International application No.

**PCT/KR2018/011319**

| Patent document cited in search report | Publication date | Patent family member | Publication date |
|---|---|---|---|
| KR 10-2018-0014540 A | 09/02/2018 | None | |
| KR 10-0844085 B1 | 04/07/2008 | KR 10-2006-0056878 A | 25/05/2006 |
| KR 10-2011-0133644 A | 14/12/2011 | None | |
| KR 10-2006-0012347 A | 08/02/2006 | None | |
| KR 10-2013-0006884 A | 18/01/2013 | KR 10-1418808 B1 | 15/07/2014 |

Form PCT/ISA/210 (patent family annex) (January 2015)